# EUROPEAN PATENT SPECIFICATION

(11) **EP 1 388 280 B1**
(45) Date of publication and mention of the grant of the patent: **02.11.2005**
(21) Application number: 03077092.9
(22) Date of filing: 04.07.2003
(51) Int. Cl.: A01J 7/02

(54) **A device for and a method of monitoring the cleaning of a milk line**
Vorrichtung und Verfahren für die Überwachung der Reinigung einer Milchleitung
Dispositif et méthode pour surveiller le nettoyage d'une conduite de lait

(30) Priority: 06.08.2002 NL 1021218; 11.09.2002 NL 1021431
(43) Date of publication of application: 11.02.2004
(73) Proprietor: Lely Enterprises AG, 6300 ZUG (CH)
(72) Inventor: Fransen, Renatus Ignatius Josephus, 3135 ZD Vlaardingen (NL); Veenstra, Aalze, 2805 SJ Gouda (NL)
(74) Representative: Corten, Maurice Jean F.M.

(56) References cited:
- EP-A- 0 761 091
- WO-A-01/19175
- US-A- 5 996 529
- US-A- 6 089 242

## Description

The invention relates to a device and a method adapted to monitor the cleaning of a milk line according to the preamble of claims 1 and 8.

Such a device is known from US-A-6,089,242. This document discloses a dairy pipeline wash system comprising a plurality of thermo-couples each in thermal communication with a predetermined location in the dairy pipeline system for transmitting to a data processor a signal corresponding to the temperature at that respective pipeline location. The data processor is further programmed to compare the signal of each thermo-couple to a predetermined acceptable temperature range and generate a warning signal if the temperature at any thermo-couple location is out of the acceptable temperature range.

It is an object of the invention to provide an alternative device adapted to monitor the cleaning of a milk line, with which the generation of incorrect alarms is reduced and with which it is possible to take a correct decision about whether or not the cleaning of the milk line has properly been performed.

For this purpose a device adapted to monitor the cleaning of a milk line during a cleaning cycle of the sort as defined comprises in accordance with the invention the features of the characterizing part of claim 1. In this manner it is possible to check the cleaning only after the last point of time, so that no alarms are supplied between the first and the last point of time, which prevents many incorrect alarms. In addition an in particular accurate indication of the degree of cleaning is thus obtained when the comparing device is suitable for determining whether the measured temperature between the first and the last point of time at least equals a second threshold temperature during a minimum, predetermined uninterrupted period of time. .

From US-A-5,996,529 a system for use in a milking parlour having a plurality of stalls is known. The system includes a plurality of milk metering subsystems each of which is assigned to one of the plurality of stalls. The milk metering subsystem senses the temperature of milk and/or wash water flowing through the milk metering subsystem. A microprocessor controller is configured to automatically store all or selective portions of the milk temperature data obtained by the milk metering subsystems.

From EP-A-0 761 091 a method of cleaning a milk line system is known. In order to be able to control the temperature of a rinsing liquid flowing through said milk line system a temperature sensor in communication with a computer controlling a heating element senses the temperature and provides a corresponding signal to the computer.

For providing a sufficient indication as to whether the cleaning has been performed correctly, in an embodiment of a device according to the invention the comparing device is adapted to determine the highest temperature between the first and the last point of time. Additionally or alternatively the comparing device is adapted to determine the average temperature between the first and the last point of time.

The thermometer may also be used for monitoring the pre-rinsing phase and the post-rinsing phase of the cleaning of a milk line.

In an embodiment of a device according to the invention the device is provided with a conductivity meter adapted to measure the conductivity of a fluid that is present or has been present in the milk line. As the conductivity of the cleaning fluid often differs from the conductivity of the milk, the conductivity, or an other electrical parameter, can be used for monitoring the cleaning. Also in this case there can be made a comparison with reference values for the conductivity.

In a further embodiment of a device according to the invention the device is provided with a meter adapted to measure an optical parameter, in particular a colour meter for measuring the colour and/or the intensity of a colour band of a fluid that is present or has been present in the milk line. As the colour and/or the intensity of certain colour bands of the cleaning fluid often differ(s) from the colour and/or the intensity of the milk, the colour can be used for an additional monitoring of the cleaning. Also in this case there can be made a comparison with reference values for the colour.

If an alarm device is adapted to be operated by the comparing device, in cases of alarm it is possible for example to inform a supervisor about the situation.

The invention also relates to a method of monitoring the cleaning of a milk line during a cleaning cycle according to claim 8.

Favourable embodiments of the method according to the invention are described in the sub-claims.

The invention will be explained hereinafter in further detail with reference to embodiments shown in the drawing, in which:
Figure 1 shows diagrammatically an embodiment of a device according to the invention, and
Figure 2 shows diagrammatically a time graph of the temperature measured in the discharge line to the sewer.

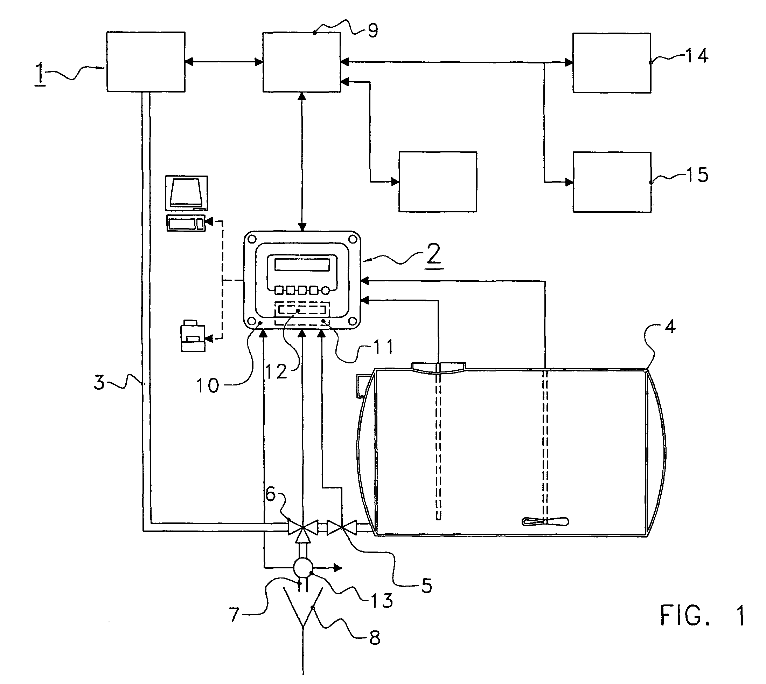

Figure 1 shows diagrammatically an embodiment of an assembly of an automatic milking system 1 and a device 2 adapted to monitor, i.e. for monitoring the cleaning of a milk line 3 (also called supply line).

The automatic milking system 1 is connected to a milk tank 4 via the supply line 3. Via the supply line 3 it is possible to convey milk from the automatic milking system 1 to the milk tank 4 during the milking. There is disposed a valve, in particular a controlled valve 5, in the supply line 3 for the purpose of allowing, if desired, milk or an other fluid, in particular a liquid, to flow into the milk tank 4.

It is known per se that the automatic milking system 1, in particular those components thereof that come directly into contact with milk, is regularly cleaned. For this purpose there is used a central cleaning system 9, known per se. Cleaning liquids (but also steam or an other fluid) that have been passed from the central cleaning system 9 through the automatic milking system 1, are then discharged via said supply line 3. In the supply line 3 there is included a three-way valve, in particular a controlled three-way valve 6, to which three-way valve 6 there is connected a discharge line 7 to a sewer 8 or the like. The valve 5 is then located between the three-way valve 6 and the milk tank 4.

The invention relates to the device 2 for monitoring the cleaning of the milk line 3. For this purpose the device 2 comprises a monitoring-unit 10. The monitoring-unit 10 comprises a computer 11 and a memory 12 for storing data at least temporarily.

In the embodiment shown in Figure 1 the monitoring-unit 10 further comprises a not separately shown clock for measuring time durations, which clock is integrated in the computer 11. In case of malfunction of the system said clock automatically continues to work with the aid of an emergency power supply and the points of time are stored at any rate in the memory.

The monitoring device 2 is further provided with a thermometer 13 for measuring the temperature of a fluid that is present in the discharge line 7. The thermometer 13 is suitable for supplying a temperature signal to the monitoring-unit 10, in particular the computer 11 thereof, which temperature signal is indicative of the temperature of the fluid present in the discharge line. The measured values of said thermometer 13 can then be used for monitoring the cleaning of the milk line 3.

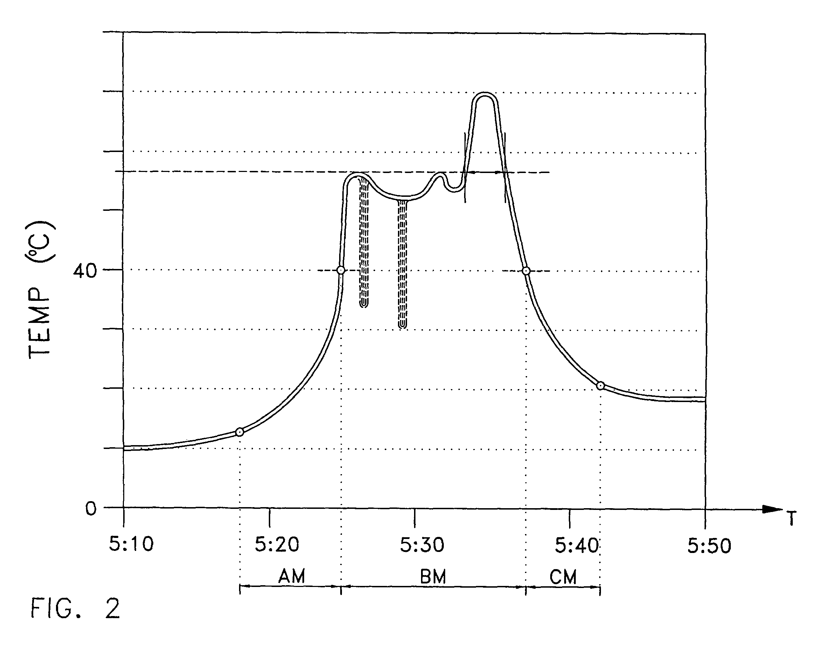

Such a cleaning is diagrammatically shown in the graph of Figure 2. In said cleaning a pre-rinsing phase AM, a main-cleaning phase BM and a post-rinsing phase CM can be distinguished. It is usually assumed that the cleaning of the milk line has been performed correctly when the temperature has constantly been above for example approximately 40°C (an other threshold value is possible as well) during the main-cleaning phase BM. Said usual detection can simply be performed by the device according to the invention. It has been found, however, that due to the fact that during the cleaning of the milk line the cleaning fluid, in particular the cleaning fluid that has been used during the main-cleaning phase, is pulsated, the temperature comes below the temperature threshold during the main-cleaning phase BM (and then again rises to above said temperature threshold, as shown by the interrupted lines). This does not only lead to many incorrect attentions, but moreover it is impossible to take a correct decision about whether or not the cleaning of the milk line has properly been performed.

In the monitoring device 2 according to the invention incorrect messages are prevented by recording in the memory 12 of the computer 11 the first moment when the temperature has come above the threshold (for example 40°C) and the last moment when the temperature has come below the threshold. The last moment may be determined for example by measuring, within a measuring-time duration after a moment when the temperature has come below the threshold, whether the temperature rises again to above the threshold. The measuring-time duration may be determined while taking into account the duration of the pulsations, and may have for example a value of twice (or a different multiple) the pulsation duration. The measuring-time duration may alternatively be a fixed time duration within which measurements take place. After it has been established that within the measuring-time duration the temperature has no more come above the temperature threshold, it is established that the main-cleaning phase BM has ended. Only at that moment the comparing device compares whether the temperature has met the predetermined threshold during the main-cleaning phase BM. Thus many incorrect messages are prevented. According to the invention a correct main-cleaning has taken place if during the main-cleaning phase the temperature of the main-cleaning liquid has reached at least a minimum temperature value (for example 57°C) during an uninterrupted time duration (for example 120s). Of course, other thresholds may be applied as well.

The memory 12 is then suitable for containing a lower threshold for the temperature of a fluid in the discharge line for the main-cleaning phase. Besides, an upper threshold for the temperature in the pre-rinsing phase may be included in the memory. Other thresholds may be applied as well.

The comparing device is capable of supplying an alarm signal to an alarm device 14, 15, as a result of which the alarm device 14, 15 can be operated. The alarm device may be a separate alarm device 14 or, in the case there is provided an automatic milking system 1, the robot alarm device 15. Said alarm device is then capable of giving for example a message to the mobile telephone of the supervisor, or a similar message.

Although the invention has been described with reference to an assembly comprising an automatic milking system, it will be obvious that the invention can also be applied to an assembly comprising a conventional or semiautomatic milking system. It will further be obvious that the thermometer can also be disposed in the milk line (supply line).

The monitoring device 2 shown in Figure 1 comprises a comparing device, in the embodiment shown integrated in the computer 11, although a separate comparing device may be applied as well, which is suitable for determining the first point of time when the measured temperature has come above the threshold temperature (which can be set behorehand) for the first time during a cleaning cycle, and for determining the last point of time when the measured temperature has come above the threshold temperature for the last time during the same cleaning cycle. The comparing device can also be suitable for determining the highest temperature and/or the average temperature between the first and the last point of time.

The comparing device is further suitable for determining whether the measured temperature between the first and the last point of time at least equals a second threshold temperature (which can be set beforehand and which is in particular higher than the first threshold temperature) during a minimum, predetermined uninterrupted period of time.

The invention also relates to a method of monitoring the cleaning of a milk line during a cleaning cycle. Said method comprises in particular the step of supplying an alarm in the following cases:
- when the period of time between the first point of time and the last point of time is lower than a predetermined threshold time,
- when the maximum temperature is lower than a predetermined threshold top temperature,
- when the average temperature is lower than a predetermined average threshold temperature,
- when the temperature does not at least equal the second threshold temperature during the minimum, predetermined uninterrupted period of time.

Although the invention has been described with respect to the main-cleaning, it will be obvious that the thermometer can also be used for monitoring the cleaning during the pre-rinsing phase AM and the post-rinsing phase CM. There may additionally be used a meter for measuring an electrical parameter, such as the conductivity, and/or a meter for measuring an optical parameter, such as the colour, reflection, dispersion or absorption, for monitoring the cleaning. Said meters may be disposed for example in the same place as the thermometer.

## Claims

1. A device adapted to monitor the cleaning of a milk line (3) during a cleaning cycle, said device being provided with a monitoring-unit (10) comprising a computer (11) and a memory (12) adapted to store data at least temporarily, with a thermometer (13) adapted to measure the temperature of a fluid that is present or has been present in the milk line (3) and adapted to supply to the monitoring-unit (10) a temperature signal that is indicative of the measured temperature, and with a comparing device adapted to determine whether the measured temperature is higher than a predetermined threshold temperature, **characterized in that** the comparing device is adapted to determine the first point of time when the measured temperature has come above the threshold temperature for the first time during a cleaning cycle, and adapted to determine the last point of time when the measured temperature has come above the threshold temperature for the last time during the same cleaning cycle, and **in that** the comparing device is adapted to determine whether the measured temperature between the first and the last point of time at least equals a second threshold temperature during a minimum, predetermined uninterrupted period of time.

2. A device as claimed in claim 1, **characterized in that** the comparing device is adapted to determine the highest temperature between the first and the last point of time.

3. A device as claimed in claim 1 or 2, **characterized in that** the comparing device is adapted to determine the average temperature between the first and the last point of time.

4. A device as claimed in any one of the preceding claims, **characterized in that** the device is provided with a conductivity meter adapted to measure the conductivity of a fluid that is present or has been present in the milk line (3).

5. A device as claimed in any one of the preceding claims, **characterized in that** the device is provided with a meter adapted to measure an optical parameter of a fluid that is present or has been present in the milk line (3).

6. A device as claimed in claim 5, **characterized in that** the meter adapted to measure an optical parameter is a colour meter adapted to measure the colour and/or the intensity of a colour band of a fluid that is present or has been present in the milk line (3).

7. A device as claimed in any one of the preceding claims, **characterized in that** an alarm device (14) is adapted to be operated by the comparing device.

8. A method of monitoring the cleaning of a milk line (3) during a cleaning cycle, the method comprises the steps of:
measuring the temperature of a fluid that is present or has been present in the milk line,
determining whether the measured temperature is higher than a predetermined threshold temperature, **characterized in that** the method further comprises the steps of:
determining the first point of time when the measured temperature has come above the threshold temperature for the first time during a cleaning cycle,
determining the last point of time when the measured temperature has come above the threshold temperature for the last time during the same cleaning cycle, and
determining whether the measured temperature between the first and the last point of time at least equals a second threshold temperature during a minimum, predetermined uninterrupted period of time.

9. A method as claimed in claim 8, **characterized in that** the method further comprises the step of determining the highest temperature between the first and the last point of time.

10. A method as claimed in claim 8 or 9, **characterized in that** the method comprises the step of determining the average temperature between the first and the last point of time.

11. A method as claimed in claim 8, **characterized in that** the method comprises the step of giving an alarm when the period of time between the first point of time and the last point of time is shorter than a predetermined threshold time.

12. A method as claimed in claim 9, **characterized in that** the method comprises the step of giving an alarm when the maximum temperature is lower than a predetermined threshold top temperature.

13. A method as claimed in claim 10, **characterized in that** the method comprises the step of giving an alarm when the average temperature is lower than a predetermined average threshold temperature.

14. A method as claimed in claim 8, **characterized in that** the method comprises the step of giving an alarm when the temperature does not at least equal the second threshold temperature during the minimum, predetermined uninterrupted period of time.

15. A method as claimed in any one of claims 8 to 14, **characterized in that** the method comprises the step of measuring the conductivity of a fluid that is present or has been present in the milk line.

16. A method as claimed in any one of claims 8 to 15, **characterized in that** the method comprises the step of measuring an optical parameter, in particular the colour and/or the intensity, of a colour band of a fluid that is present or has been present in the milk line.

## Patentansprüche

1. Vorrichtung zum Überwachen der Reinigung einer Milchleitung (3) während eines Reinigungsvorganges, wobei die Vorrichtung versehen ist mit einer Überwachungsvorrichtung (10) mit einem Computer (11) und einem Speicher (12), der Daten zumindest vorübergehend speichern kann, mit einem Thermometer (13), das die Temperatur einer Flüssigkeit messen kann, die sich in der Milchleitung (3) befindet oder befand, und an die Überwachungsvorrichtung (10) ein Temperatursignal liefern kann, das die gemessene Temperatur anzeigt, sowie mit einer Vergleichsvorrichtung, die ermitteln kann, ob die gemessene Temperatur höher ist als eine vorgegebene Grenzwert-Temperatur,
**dadurch gekennzeichnet, daß** die Vergleichsvorrichtung den ersten Zeitpunkt ermitteln kann, zu dem die gemessene Temperatur zum ersten Mal während eines Reinigungsvorganges die Grenzwert-Temperatur überschritten hat, und den letzten Zeitpunkt ermitteln kann, zu dem die gemessene Temperatur zum letzten Mal während desselben Reinigungsvorganges die Grenzwert-Temperatur überschritten hat, und daß die Vergleichsvorrichtung feststellen kann, ob die gemessene Temperatur zwischen dem ersten und dem letzten Zeitpunkt zumindest gleich einer zweiten Grenzwert-Temperatur während eines minimalen vorgegebenen ununterbrochenen Zeitraumes ist.

2. Vorrichtung nach Anspruch 1,
**dadurch gekennzeichnet, daß** die Vergleichsvorrichtung die höchste Temperatur zwischen dem ersten und dem letzten Zeitpunkt ermitteln kann.

3. Vorrichtung nach Anspruch 1 oder 2,
**dadurch gekennzeichnet, daß** die Vergleichsvorrichtung die durchschnittliche Temperatur zwischen dem ersten und dem letzten Zeitpunkt ermitteln kann.

4. Vorrichtung nach einem der vorhergehenden Ansprüche,
**dadurch gekennzeichnet, daß** die Vorrichtung mit einem Leitfähigkeitsmeßgerät zum Messen der Leitfähigkeit einer Flüssigkeit versehen ist, die sich in der Milchleitung (3) befindet oder befand.

5. Vorrichtung nach einem der vorhergehenden Ansprüche,
**dadurch gekennzeichnet, daß** die Vorrichtung mit einem Meßgerät versehen ist, um einen optischen Parameter einer Flüssigkeit zu messen, die sich in der Milchleitung (3) befindet oder befand.

6. Vorrichtung nach Anspruch 5,
**dadurch gekennzeichnet, daß** das Meßgerät zum Messen eines optischen Parameters ein Farbmeßgerät zum Messen der Farbe und/oder der Intensität eines Farbbandes einer Flüssigkeit ist, die sich in der Milchleitung (3) befindet oder befand.

7. Vorrichtung nach einem der vorhergehenden Ansprüche,
**dadurch gekennzeichnet, daß** von der Vergleichsvorrichtung eine Alarmvorrichtung (14) betätigt werden kann.

8. Verfahren zum Überwachen der Reinigung einer Milchleitung (3) während eines Reinigungsvorganges, wobei das Verfahren folgende Verfahrensschritte umfaßt:
- Messen der Temperatur einer Flüssigkeit, die sich in der Milchleitung befindet oder befand,
- Feststellen, ob die gemessene Temperatur höher ist als eine vorgegebene Grenzwert-Temperatur,
**dadurch gekennzeichnet, daß** das Verfahren ferner folgende Verfahrensschritte umfaßt:
- Ermitteln des ersten Zeitpunktes, zu dem die gemessene Temperatur die Grenzwert-Temperatur zum ersten Mal während eines Reinigungsvorganges überschritten hat,
- Ermitteln des letzten Zeitpunktes, zu dem die gemessene Temperatur die Grenzwert-Temperatur zum letzten Mal während desselben Reinigungsvorganges überschritten hat, und
- Feststellen, ob die gemessene Temperatur zwischen dem ersten und dem letzten Zeitpunkt zumindest gleich einer zweiten Grenzwert-Temperatur während eines minimalen vorgegebenen ununterbrochenen Zeitraumes ist.

9. Verfahren nach Anspruch 8,
**dadurch gekennzeichnet, daß** das Verfahren ferner den Verfahrensschritt des Ermittelns der höchsten Temperatur zwischen dem ersten und dem letzten Zeitpunkt umfaßt.

10. Verfahren nach Anspruch 8 oder 9,
**dadurch gekennzeichnet, daß** das Verfahren den Verfahrensschritt des Ermittelns der durchschnittlichen Temperatur zwischen dem ersten und dem letzten Zeitpunkt umfaßt.

11. Verfahren nach Anspruch 8,
**dadurch gekennzeichnet, daß** das Verfahren den Verfahrensschritt des Auslösens eines Alarms umfaßt, wenn der Zeitraum zwischen dem ersten Zeitpunkt und dem letzten Zeitpunkt kürzer ist als eine vorgegebene Grenzwertzeit.

12. Verfahren nach Anspruch 9,
**dadurch gekennzeichnet, daß** das Verfahren den Verfahrensschritt des Auslösens eines Alarms umfaßt, wenn die maximale Temperatur niedriger ist als eine vorgegebene Grenzwert-Höchsttemperatur.

13. Verfahren nach Anspruch 10,
**dadurch gekennzeichnet, daß** das Verfahren den Verfahrensschritt des Auslösens eines Alarms umfaßt, wenn die Durchschnittstemperatur niedriger ist als eine vorgegebene durchschnittliche Grenzwert-Temperatur.

14. Verfahren nach Anspruch 8,
**dadurch gekennzeichnet, daß** das Verfahren den Verfahrensschritt des Auslösens eines Alarms umfaßt, wenn die Temperatur nicht zumindest gleich der zweiten Grenzwert-Temperatur während des minimalen vorgegebenen ununterbrochenen Zeitraumes ist.

15. Verfahren nach einem der Ansprüche 8 bis 14,
**dadurch gekennzeichnet, daß** das Verfahren den Verfahrensschritt des Messens der Leitfähigkeit einer Flüssigkeit umfaßt, die sich in der Milchleitung befindet oder befand.

16. Verfahren nach einem der Ansprüche 8 bis 15,
**dadurch gekennzeichnet, daß** das Verfahren den Verfahrensschritt des Messens eines optischen Parameters umfaßt, insbesondere der Farbe und/oder der Intensität eines Farbbandes einer Flüssigkeit, die sich in der Milchleitung befindet oder befand.

## Revendications

1. Dispositif adapté pour contrôler le nettoyage d'un lactoduc (3) au cours d'un cycle de nettoyage, ledit dispositif étant pourvu d'une unité de contrôle (10) comprenant un ordinateur (11) et une mémoire (12) adaptée pour stocker des données au moins temporairement, avec un thermomètre (13) adapté pour mesurer la température d'un fluide qui est présent ou a été présent dans le lactoduc (3) et adapté pour fournir à l'unité de contrôle (10) un signal de température qui est indicatif de la température mesurée, et avec un dispositif de comparaison adapté pour déterminer si la température mesurée est supérieure à une température seuil prédéterminée, **caractérisé en ce que** le dispositif de comparaison est adapté pour déterminer le premier instant auquel la température mesurée a dépassé la température seuil pour la première fois au cours d'un cycle de nettoyage, et adapté pour déterminer le dernier instant auquel la température mesurée a dépassé la température seuil pour la dernière fois au cours du même cycle de nettoyage, et **en ce que** le dispositif de comparaison est adapté pour déterminer si la température mesurée entre les premier et dernier instants est au moins égale à une seconde température seuil au cours d'une période ininterrompue prédéterminée minimum.

2. Dispositif selon la revendication 1, **caractérisé en ce que** le dispositif de comparaison est adapté pour déterminer la température la plus élevée entre les premier et dernier instants.

3. Dispositif selon la revendication 1 ou 2, **caractérisé en ce que** le dispositif de comparaison est adapté pour déterminer la température moyenne entre les premier et dernier instants.

4. Dispositif selon l'une quelconque des revendications précédentes, **caractérisé en ce que** le dispositif est pourvu d'un conductivimètre adapté pour mesurer la conductivité d'un fluide qui est présent ou a été présent dans le lactoduc (3).

5. Dispositif selon l'une quelconque des revendications précédentes, **caractérisé en ce que** le dispositif est pourvu d'un appareil de mesure adapté pour mesurer un paramètre optique d'un fluide qui est présent ou a été présent dans le lactoduc (3).

6. Dispositif selon la revendication 5, **caractérisé en ce que** l'appareil de mesure adapté pour mesurer un paramètre optique est un colorimètre adapté pour mesurer la couleur et/ou l'intensité d'une bande de couleur d'un fluide qui est présent ou a été présent dans le lactoduc (3).

7. Dispositif selon l'une quelconque des revendications précédentes, **caractérisé en ce qu'**un dispositif d'avertissement (14) est adapté pour être actionné par le dispositif de comparaison.

8. Procédé de contrôle du nettoyage d'un lactoduc (3) au cours d'un cycle de nettoyage, le procédé comprenant les étapes consistant à :
mesurer la température d'un fluide qui est présent ou a été présent dans le lactoduc,
déterminer si la température mesurée est supérieure à une température seuil prédéterminée,
**caractérisé en ce que** le procédé comprend en outre les étapes consistant à :
déterminer le premier instant auquel la température mesurée a dépassé la température seuil pour la première fois au cours d'un cycle de nettoyage,
déterminer le dernier instant auquel la température mesurée a dépassé la température seuil pour la dernière fois au cours du même cycle de nettoyage, et
déterminer si la température mesurée entre les premier et dernier instants est au moins égale à une seconde température seuil au cours d'une période ininterrompue prédéterminée minimum.

9. Procédé selon la revendication 8, **caractérisé en ce que** le procédé comprend en outre l'étape consistant à déterminer la température la plus élevée entre les premier et dernier instants.

10. Procédé selon la revendication 8 ou 9, **caractérisé en ce que** le procédé comprend l'étape consistant à déterminer la température moyenne entre les premier et dernier instants.

11. Procédé selon la revendication 8, **caractérisé en ce que** le procédé comprend l'étape consistant à donner un avertissement lorsque la période entre le premier instant et le dernier instant est plus courte qu'une période seuil prédéterminée.

12. Procédé selon la revendication 9, **caractérisé en ce que** le procédé comprend l'étape consistant à donner un avertissement lorsque la température maximum est inférieure à une température maximale seuil prédéterminée.

13. Procédé selon la revendication 10, **caractérisé en ce que** le procédé comprend l'étape consistant à donner un avertissement lorsque la température moyenne est inférieure à une température seuil moyenne prédéterminée.

14. Procédé selon la revendication 8, **caractérisé en ce que** le procédé comprend l'étape consistant à donner un avertissement lorsque la température n'est pas au moins égale à la seconde température seuil au cours de la période ininterrompue prédéterminée minimum.

15. Procédé selon l'une quelconque des revendications 8 à 14, **caractérisé en ce que** le procédé comprend l'étape consistant à mesurer la conductivité d'un fluide qui est présent ou a été présent dans le lactoduc.

16. Procédé selon l'une quelconque des revendications 8 à 15, **caractérisé en ce que** le procédé comprend l'étape consistant à mesurer un paramètre optique, en particulier la couleur et/ou l'intensité, d'une bande de couleur d'un fluide qui est présent ou a été présent dans le lactoduc.
